# EUROPEAN PATENT APPLICATION

(11) **EP 2 873 521 A1**
(43) Date of publication of application: **20.05.2015**
(21) Application number: 12881661.8
(22) Date of filing: 24.07.2012
(51) Int. Cl.: B32B 15/01, B32B 37/10, B32B 38/00, B05D 7/14, B22F 3/11

(54) **METHOD FOR MANUFACTURING METAL FOAM STACK**

(71) Applicant: Alantum, Seongnam-si, Gyeonggi-do 462-120 (KR)
(72) Inventor: JANG, Myungjoon, Seongnam-city Gyeonggi-do 462-120 (KR); BAE, Jungsuk, Seoul 121-897 (KR); PARK, Man-Ho, Seoul 157-882 (KR); KIM, Gi-Young, Guri-si Gyeonggi-do 471-750 (KR)
(74) Representative: Manitz, Finsterwald & Partner GbR
(86) International application number: PCT/KR2012/005900
(87) International publication number: WO 2014/017675

(57) **Abstract**

A method of manufacturing a metal foam stack is provided. According to the present invention, the method includes: a metal foam sheet preparing step of preparing a plurality of metal foam sheets having a predetermined size and shape; a slurry application step of applying a slurry on a surface of the metal foam sheet; a metal foam stack forming step of forming the metal foam stack by stacking the metal foam sheets in a block form; a pressing force application step of applying pressing force having a predetermined magnitude to the metal foam stack; a pressing force removing step of removing pressing force applied to the metal foam stack after the pressing force application step is performed; and a heat treatment step of performing heat treatment of the metal foam stack to strongly attach the metal foam sheets to each other after pressing force applied to the metal foam stack is removed in the pressing force removing step.

## Description

### [Technical Field]

The present invention relates to a method of manufacturing a metal foam stack, and more particularly, to a method of manufacturing a metal foam stack in which metal foam sheets are stacked in a block form to manufacture the metal foam stack having a desired thickness while a pore structure is not broken.

### [Background Art]

Generally, a metal foam refers to a porous metal having many pores in a metal material.

The metal foam is classified as an open cell type or a closed cell type according to a shape of the pore included therein. The open cell type exists in a form where the pores are connected to each other, and thus a gas or a fluid can easily pass through the pores. On the contrary, the closed cell type independently exists while the pores are not connected to each other, and thus a gas or a fluid cannot easily pass therethrough.

In the case of the metal foam of the open cell type, a structure thereof is similar to a human bone and thus is stable, and because of physical properties that a surface area ratio per unit volume is extremely high and a weight is small, the metal foam may be used for various purposes.

The metal foam is used in various industrial fields such as for a battery electrode, parts of a fuel cell, a filter for an exhaust gas filtering device, a pollution controlling device, a catalyst support, and audio parts.

However, in the related art, in order to manufacture a metal foam stack, since a sintering process is performed after the metal foam and the metal foam are simply stacked, shrinkage severely occurs at a central portion and a side portion of the manufactured metal foam stack, and thus a pore structure easily breaks and it is difficult to manufacture the metal foam stack having a desired thickness.

The above information disclosed in this Background section is only for enhancement of understanding of the background of the invention and therefore it may contain information that does not form the prior art that is already known in this country to a person of ordinary skill in the art.

### [DISCLOSURE]

### [Technical Problem]

The present invention has been made in an effort to provide a method of manufacturing a metal foam stack, in which metal foam sheets are stacked in a block form to manufacture the metal foam stack having a desired thickness while preventing a pore structure from being broken.

### [Technical Solution]

An exemplary embodiment of the present invention provides a method of manufacturing a metal foam stack, including: a metal foam sheet preparing step of preparing a plurality of metal foam sheets having a predetermined size and shape;
a slurry application step of applying a slurry on a surface of the metal foam sheet;
a metal foam stack forming step of forming the metal foam stack by stacking the metal foam sheets in a block form;
a pressing force application step of applying pressing force having a predetermined magnitude to the metal foam stack;
a pressing force removing step of removing pressing force applied to the metal foam stack after the pressing force application step is performed; and
a heat treatment step of performing heat treatment of the metal foam stack to strongly attach the metal foam sheets to each other after the pressing force applied to the metal foam stack is removed in the pressing force removing step.

The slurry may include a powder and a binder, and
the powder may include 15 wt% or more of nickel (Ni) or 20 wt% or more of chromium (Cr) as an alloy powder.

The slurry may be applied on the entire metal foam sheet during stacking of the metal foam stack, and
the slurry may be directly applied on the metal foam sheet, or the powder may be applied after the binder is applied.

The metal foam sheet may be formed of at least one selected from a Ni-based metal foam, an Fe-based metal foam, and a Cu-based metal foam.

The pressing force application step may include a plate disposing step of disposing a plate on an upper surface of the metal foam sheet positioned on an uppermost portion of the metal foam stack, and

a loading member disposing step of disposing a loading member on the plate to load an entire section of the plate.

The pressing force removing step may include a loading member removing step of removing the loading member disposed on the plate, and
a plate removing step of removing the plate disposed on the upper surface of the metal foam sheet positioned on the uppermost portion of the metal foam stack.

The plate may be formed of a material of molybdenum or titanium having low reactivity.

The heat treatment step may include a debinding step of removing a binder component from the metal foam stack, and
a sintering step of sintering the metal foam stack to be uniformly attached in an entire thickness range of the metal foam sheet.

The debinding step may be performed for 1 to 2 hours in a state where a temperature is maintained at 500 to 600 °C, and the sintering step may be performed for 1 to 2 hours in a state where a temperature is maintained at 1100 to 1300 °C.

Another exemplary embodiment of the present invention provides a method of manufacturing a metal foam stack, including: a metal foam sheet preparing step of preparing a plurality of metal foam sheets having a predetermined size and shape;
a slurry application step of applying a slurry on a surface of the metal foam sheet;
a metal foam stack forming step of forming the metal foam stack by stacking the metal foam sheets in a block form; and
a pressing force application and heat treatment step of performing heat treatment of the metal foam stack to strongly attach the metal foam sheets to each other while applying pressing force having a predetermined magnitude to the metal foam stack.

The method may include a pressing force removing step of removing pressing force applied to the metal foam stack after the pressing force application and heat treatment step is performed.

The metal foam sheet may be formed of at least one selected from a Ni-based metal foam, an Fe-based metal foam, and a Cu-based metal foam.

The slurry may include a powder and a binder, and
the powder may include 15 wt% or more of nickel (Ni) or 20 wt% or more of chromium (Cr) as an alloy powder.

The slurry may be applied on the entire metal foam sheet during stacking of the metal foam stack, and
the slurry may be directly applied on the metal foam sheet, or the powder may be applied after the binder is applied.

The pressing force application and heat treatment step may include a plate disposing step of disposing a plate on an upper surface of the metal foam sheet positioned on an uppermost portion of the metal foam stack, and
a loading member disposing step of disposing a loading member on the plate to load an entire section of the plate.

The pressing force removing step may include a loading member removing step of removing the loading member disposed on the plate, and
a plate removing step of removing the plate disposed on the upper surface of the metal foam sheet positioned on the uppermost portion of the metal foam stack.

The plate may be formed of a material of molybdenum or titanium having low reactivity.

The pressing force application and heat treatment step may include, while the loading member disposing step is performed, a debinding step of removing a binder component from the metal foam stack, and a sintering step of sintering the metal foam stack to be uniformly attached in an entire thickness range of the metal foam sheet.

The debinding step may be performed for 1 to 2 hours in a state where a temperature is maintained at 500 to 600 °C, and the sintering step may be performed for 1 to 2 hours in a state where a temperature is maintained at 1100 to 1300 °C.

### [Advantageous Effects]

According to the present exemplary embodiment, it is possible to manufacture a metal foam stack having a desired thickness while preventing a pore structure from being broken by stacking metal foam sheets in a block form.

### [Description of the Drawings]

FIG. 1 is a schematic diagram according to a method of manufacturing a metal foam stack according to a first exemplary embodiment of the present invention.
FIG. 2 is a schematic diagram according to a method of manufacturing a metal foam stack according to a second exemplary embodiment of the present invention.

### [Mode for Invention]

The present invention will be described more fully hereinafter with reference to the accompanying drawings, in which exemplary embodiments of the invention are shown so as to be easily understood by a person with ordinary skill in the art. As those skilled in the art would realize, the described embodiments may be modified in various different ways, all without departing from the spirit or scope of the present invention.

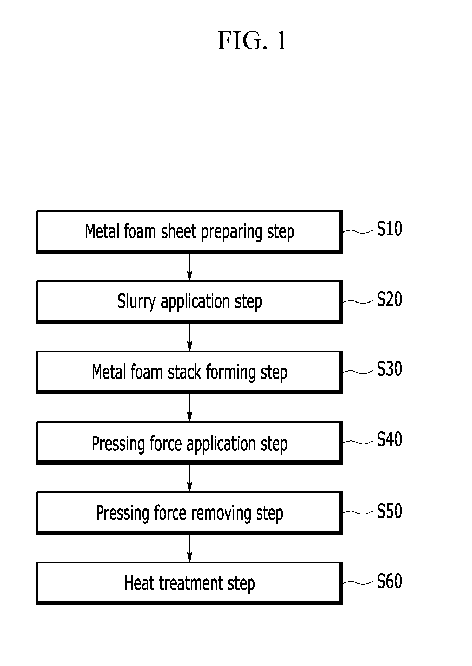

FIG. 1 is a schematic diagram according to a method of manufacturing a metal foam stack according to a first exemplary embodiment of the present invention.

Referring to FIG. 1, the method of manufacturing the metal foam stack according to the first exemplary embodiment of the present invention may include: a metal foam sheet preparing step of preparing a plurality of metal foam sheets having a predetermined size and shape (S10);
a slurry application step of applying a slurry on a surface of the metal foam sheet (S20);
a metal foam stack forming step of forming the metal foam stack by stacking the metal foam sheets in a block form (S30);
a pressing force application step of applying pressing force having a predetermined magnitude to the metal foam stack (S40);
a pressing force removing step of removing pressing force applied to the metal foam stack after the pressing force application step (S40) is performed (S50); and
a heat treatment step of performing heat treatment of the metal foam stack to strongly attach the metal foam sheets to each other after the pressing force removing step (S50) is performed (S60).

The metal foam may be manufactured by a method including steps of depositing titanium or a titanium alloy on a surface of an organic porous material using electroplating to prepare a conductive porous material, passing a metal electroplating solution through the conductive porous material to electroplate a metal on the surface of the conductive porous material, and performing heat treatment of the conductive porous material on which the metal is plated to remove the organic porous material component. The method of manufacturing the metal foam is a general method, and a detailed description thereof will be omitted.

Further, the metal foam sheet may be formed of at least one selected from pure foams such as a Ni-based metal foam, an Fe-based metal foam, and a Cu-based metal foam.

The metal foam sheet is obtained by cutting the metal foam in a sheet form to have a predetermined size, and may be formed to have a quadrangular shape, but the shape thereof is not limited thereto, and the metal foam sheet may be formed to have various shapes.

Further, polyurethane may be used as the organic porous material of the metal foam, and the metal foam sheet may be formed in a thickness of at most 5 mm or less, and particularly, is preferably formed in a thickness of 1.6 mm to 3.0 mm.

In the slurry application step (S20), the slurry may be applied on a contact surface between the metal foam sheets during stacking in the metal foam stack forming step (S30).

The slurry may be applied on the entire metal foam sheet, or may be applied by dipping the metal foam sheet in the slurry.

Further, in the slurry application step (S20), the slurry may include a liquid, a powder, and a binder.

The powder may include 15 wt% or more of nickel (Ni) or 20 wt% or more of chromium (Cr) as an alloy powder. The powder may include 20 wt% of nickel (Ni), 35 wt% of iron (Fe), 35 wt% of chromium (Cr), and 10 wt% of aluminum (Al) as an exemplary embodiment.

Examples of a method of applying the slurry on the metal foam sheet may include a method of directly applying the slurry on the metal foam sheet, and a separation application method of applying the binder on the entire metal foam sheet and then applying the powder on the entire metal foam sheet.

Before the slurry application step S20, the powder and the binder of the slurry may be mixed by a mixer, and in this case, a liquid such as water may be used to easily mix the powder and the binder.

The powder included in the slurry may assure favorable adhesion between the metal foam sheets and may also be used for alloying.

In the metal foam stack forming step (S30), the metal foam stack may be formed by, for example, stacking two or more metal foam sheets having a quadrangular shape in a block form.

The pressing force application step (S40) may include a plate disposing step of disposing a plate on an upper surface of the metal foam sheet positioned on an uppermost portion of the metal foam stack (S41), and
a loading member disposing step of disposing a loading member on the plate to load an entire section of the plate (S42).

The plate may be formed of a material such as molybdenum or titanium having low reactivity.

It is preferable that the loading member presses the metal foam stack, for example, at a pressure of 3 to 4 g/cm² so that a thickness of the metal foam stack is reduced in a range of 5 to 10 % when the metal foam stack is pressed in the pressing force application step (S40).

That is, sufficient bonding strength of the metal foam stack may be obtained when compressibility is within at least 10 %.

The loading member is formed to have a predetermined weight, but the weight may be variously changed according to compressibility of the metal foam stack.

Further, the pressing force removing step (S50) may include a loading member removing step of removing the loading member disposed on the plate (S51), and
a plate removing step of removing the plate disposed on the upper surface of the metal foam sheet positioned on the uppermost portion of the metal foam stack (S52).

The heat treatment step (S60) may include a debinding step of removing a binder component from the metal foam stack (S61), and
a sintering step of sintering the metal foam stack to be uniformly attached in an entire thickness range of the metal foam sheet (S62).

The debinding step (S61) may be performed for about 1 to 2 hours in a state where a temperature is maintained at about 500 to 600 °C to completely remove the binder component from the metal foam stack.

Further, the sintering step (S62) may be performed for about 1 to 2 hours in a state where a temperature is maintained at about 1200 to 1300 °C to have a uniform thickness in an entire thickness range of the metal foam sheet.

Hereinafter, a process of the method of manufacturing the metal foam stack according to the first exemplary embodiment of the present invention will be described with reference to FIG. 1.

First, for example, five metal foam sheets having a predetermined size and a quadrangular shape are prepared (S10).

In addition, the slurry is applied on surfaces of the metal foam sheets that will come into contact with each other during stacking among the five metal foam sheets (S20). Herein, as the method of applying the slurry, the separation application method of applying the binder on the metal foam sheet and then applying the powder will be described as an example.

That is, the powder is applied on the entire metal foam sheet after the binder is applied on the entire metal foam sheet positioned on the uppermost portion when the metal foam sheets are stacked, the powder is applied on the entire metal foam sheet after the binder is applied on the entire metal foam sheet positioned on the lowermost portion when the metal foam sheets are stacked, and the powder is applied on the entire metal foam sheet after the binder is applied on the entire metal foam sheet positioned on an intermediate portion when the metal foam sheets are stacked.

Further, as described above, the metal foam stack is formed by stacking the metal foam sheets on which the binder and the powder are applied in a block form (S30), and in this case, the metal foam sheets are attached by the binder applied on the contact surface thereof.

In the aforementioned state, a pressing member is disposed on an upper end surface of the metal foam sheet positioned on the uppermost portion of the metal foam stack (S41), and the loading members are disposed at regular intervals on an upper surface of the pressing member (S42).

In this case, the metal foam stack is pressed by the loading member, for example, at a pressure of 4 g/cm², and thus the thickness of the metal foam stack is reduced in a range of 10 %.

In addition, the loading member is removed from the plate (S51), the plate is removed from the metal foam sheet (S52) to remove pressing force applied to the metal foam stack, and the metal foam stack is then subjected to the debinding step (S61) for about 1 to 2 hours in a state where a temperature is maintained at about 500 to 600 °C to completely remove the binder component from the metal foam stack.

Further, after the debinding step (S61) is performed, the metal foam stack is subjected to the sintering step (S62) for about 1 to 2 hours in a state where a temperature is maintained at about 1100 to 1300 °C to have a uniform thickness in the entire thickness range of the metal foam sheet.

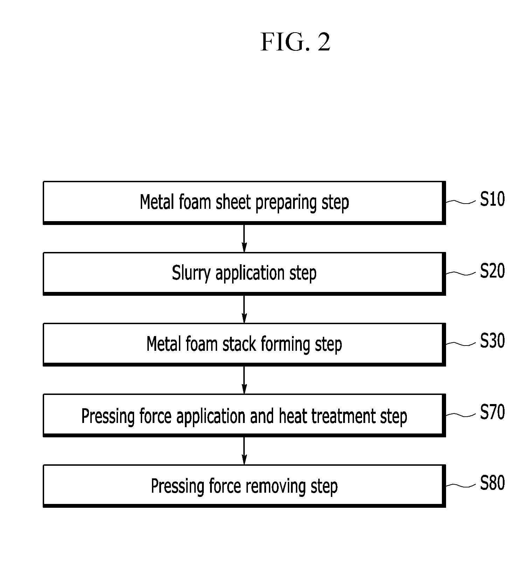

FIG. 2 is a schematic diagram according to a method of manufacturing a metal foam stack according to a second exemplary embodiment of the present invention.

Referring to FIG. 2, since the method of manufacturing the metal foam stack according to the second exemplary embodiment of the present invention is the same as that of the first exemplary embodiment except for a matter that will be particularly described below, a detailed description thereof will be omitted.

The method of manufacturing the metal foam stack according to the second exemplary embodiment of the present invention may include, after the metal foam stack forming step (S30) is performed, a pressing force application and heat treatment step of performing heat treatment of the metal foam stack to strongly attach the metal foam sheets to each other while applying pressing force having a predetermined magnitude to the metal foam stack (S70).

Further, the method may include, after the pressing force application and heat treatment step (S70) is performed, a pressing force removing step of removing pressing force applied to the metal foam stack (S80).

The pressing force application and heat treatment step (S70) may include a plate disposing step of disposing a plate on an upper surface of the metal foam sheet positioned on an uppermost portion of the metal foam stack (S71),
a loading member disposing step of disposing a loading member on the plate to load an entire section of the plate (S72), and,
while the loading member disposing step (S72) is performed, a debinding step of removing a binder component from the metal foam stack (S73) and a sintering step of sintering the metal foam stack to be uniformly attached in an entire thickness range of the metal foam sheet (S74).

The plate may be formed of a material such as molybdenum or titanium having low reactivity.

Since the loading member has a predetermined weight, it is preferable that the loading member press the metal foam stack, for example, with a pressure of 3 to 4 g/cm² so that a thickness of the metal foam stack is reduced in a range of 5 to 10 % when the metal foam stack is pressed in the pressing force application and heat treatment step (S70).

The debinding step (S73) may be performed for about 1 to 2 hours in a state where a temperature is maintained at about 500 to 600 °C to completely remove the binder component in the metal foam stack.

Further, the sintering step (S74) may be performed for about 1 to 2 hours in a state where a temperature is maintained at about 1100 to 1300 °C to have a uniform thickness in an entire thickness range of the metal foam sheet.

Further, the pressing force removing step (S80) may include a loading member removing step of removing the loading member disposed on the plate (S81), and
a plate removing step of removing the plate disposed on the upper surface of the metal foam sheet positioned on the uppermost portion of the metal foam stack (S82).

### Example 1

In order to manufacture the metal foam stack, the metal foam sheets having the pore size of 800 µm on which the powder was applied were stacked. In addition, pressing force was applied to the stacked metal foam stacks and released, followed by sintering.

The five metal foam sheets having the width and the length of 30 mm and 60 mm were each compressed from the height h of 12.5 mm to the following thickness (compressibility), and the five metal foam sheets were sintered.
a) h = 11.25 mm (10%)
b) h = 10.0 mm (20%)
c) h = 8.75 mm (30 %)

Herein, sufficient adhesion strength may be obtained when compressibility of the metal foam sheet is 10 % to 20 %.

After mechanical cutting such as with cutting wheel, delamination did not occur.

### Example 2

In order to manufacture the metal foam stack, the metal foam sheets having the pore size of 800 µm on which the powder was applied were stacked. In addition, pressing force was applied to the stacked metal foam stacks, followed by sintering.

The five metal foam sheets having the width and the length of 75 mm and 75 mm were each compressed from the height h of 12.5 mm to the following thickness (compressibility) and weight (pressing force), and the five metal foam sheets were sintered.
a) h = 11.25 mm (10 %), 250 g (p = 4.44 g/cm²)
b) h = 10.0 mm (20 %), 250 g (p = 4.44 g/cm²)
c) h = 8.75 mm (30 %), 250 g (p = 4.44 g/cm²)
d) h = 10.0 mm (20 %), 100 g (p = 1.78 g/cm²)
e) h = 10.0 mm (20 %), 50 g (p = 0.89 g/cm²)

Herein, sufficient adhesion strength may be obtained at compressibility of the metal foam sheet of at least 10%.

While this invention has been described in connection with what is presently considered to be practical exemplary embodiments, it is to be understood that the invention is not limited to the disclosed embodiments, but, on the contrary, is intended to cover various modifications and equivalent arrangements included within the spirit and scope of the appended claims.

## Claims

1. A method of manufacturing a metal foam stack, comprising:
a metal foam sheet preparing step of preparing a plurality of metal foam sheets having a predetermined size and shape;
a slurry application step of applying a slurry on a surface of the metal foam sheet;
a metal foam stack forming step of forming the metal foam stack by stacking the metal foam sheets in a block form;
a pressing force application step of applying pressing force having a predetermined magnitude to the metal foam stack;
a pressing force removing step of removing pressing force applied to the metal foam stack after the pressing force application step is performed; and
a heat treatment step of performing heat treatment of the metal foam stack to strongly attach the metal foam sheets to each other after pressing force applied to the metal foam stack is removed in the pressing force removing step.

2. The method of claim 1, wherein the slurry includes a powder and a binder, and the powder includes 15 wt% or more of nickel (Ni) or 20 wt% or more of chromium (Cr) as an alloy powder.

3. The method of claim 2, wherein the slurry is applied on the entire metal foam sheet during stacking of the metal foam stack, and the slurry is directly applied on the metal foam sheet, or the powder is applied after the binder is applied.

4. The method of claim 1, wherein the metal foam sheet is formed of at least one selected from a Ni-based metal foam, an Fe-based metal foam, and a Cu-based metal foam.

5. The method of claim 3, wherein the pressing force application step includes a plate disposing step of disposing a plate on an upper surface of the metal foam sheet positioned on an uppermost portion of the metal foam stack, and a loading member disposing step of disposing a loading member on the plate to load an entire section of the plate.

6. The method of claim 5, wherein the pressing force removing step includes a loading member removing step of removing the loading member disposed on the plate, and a plate removing step of removing the plate disposed on the upper surface of the metal foam sheet positioned on the uppermost portion of the metal foam stack.

7. The method of claim 5 or 6, wherein the plate is formed of a material of molybdenum or titanium having low reactivity.

8. The method of claim 1, wherein the heat treatment step includes a debinding step of removing a binder component from the metal foam stack, and
a sintering step of sintering the metal foam stack to be uniformly attached in an entire thickness range of the metal foam sheet.

9. The method of claim 8, wherein the debinding step is performed for 1 to 2 hours in a state where a temperature is maintained at 500 to 600 °C, and the sintering step is performed for 1 to 2 hours in a state where a temperature is maintained at 1100 to 1300 °C.

10. A method of manufacturing a metal foam stack, comprising:
a metal foam sheet preparing step of preparing a plurality of metal foam sheets having a predetermined size and shape;
a slurry application step of applying a slurry on a surface of the metal foam sheet;
a metal foam stack forming step of forming the metal foam stack by stacking the metal foam sheets in a block form; and
a pressing force application and heat treatment step of performing heat treatment of the metal foam stack to strongly attach the metal foam sheets to each other while applying pressing force having a predetermined magnitude to the metal foam stack.

11. The method of claim 10, comprising a pressing force removing step of removing pressing force applied to the metal foam stack after the pressing force application and heat treatment step is performed.

12. The method of claim 10, wherein the metal foam sheet is formed of at least one selected from a Ni-based metal foam, an Fe-based metal foam, and a Cu-based metal foam.

13. The method of claim 10, wherein the slurry includes a powder and a binder, and the powder includes 15 wt% or more of nickel (Ni) or 20 wt% or more of chromium (Cr) as an alloy powder.

14. The method of claim 13, wherein the slurry is applied on the entire metal foam sheet during stacking of the metal foam stack, and the slurry is directly applied on the metal foam sheet, or the powder is applied after the binder is applied.

15. The method of claim 10, wherein the pressing force application and heat treatment step includes a plate disposing step of disposing a plate on an upper surface of the metal foam sheet positioned on an uppermost portion of the metal foam stack, and a loading member disposing step of disposing a loading member on the plate to load an entire section of the plate.

16. The method of claim 15, wherein the pressing force removing step includes a loading member removing step of removing the loading member disposed on the plate, and a plate removing step of removing the plate disposed on the upper surface of the metal foam sheet positioned on the uppermost portion of the metal foam stack.

17. The method of claim 15 or 16, wherein the plate is formed of a material of molybdenum or titanium having low reactivity.

18. The method of claim 13, wherein the pressing force application and heat treatment step includes, while the loading member disposing step is performed, a debinding step of removing a binder component from the metal foam stack, and a sintering step of sintering the metal foam stack to be uniformly attached in an entire thickness range of the metal foam sheet.

19. The method of claim 18, wherein the debinding step is performed for 1 to 2 hours in a state where a temperature is maintained at 500 to 600 °C, and the sintering step is performed for 1 to 2 hours in a state where a temperature is maintained at 1200 to 1300 °C.
